# EUROPEAN PATENT APPLICATION

(11) **EP 2 209 325 A1**
(43) Date of publication of application: **21.07.2010**
(21) Application number: 09250100.6
(22) Date of filing: 15.01.2009
(51) Int. Cl.: H04Q 11/04, H04M 11/06

(54) **Management of telecommunications connections**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A management system for controlling a digital subscriber loop telecommunications network identifies radio frequencies used by wireless transmitters in the vicinity of each electrical connection, and controls transmission frequencies carried over the respective digital subscriber loops to prevent transmission on frequencies in which nearby radio transmitters are operating.

## Description

This invention relates to telecommunications systems and in particular to the management of network equipment interfacing between a network and individual customer premises systems. Such equipment is widely dispersed geographically, and has to operate without direct human supervision and in a wide variety of environments and circumstances.

The increasing use of radio-based communications systems can cause significant impairment of the signal in the wired network, as the wires themselves act as antennas, and the resulting RF signals can interfere with transmissions in the system. This is particularly so as the frequencies in use in the wired network rise above the 2.2MHz currently in use for ADSL2+ (Asymmetric digital subscriber Line) to 7.05MHz for VDSL2 (very high rate digital subscriber loop) and then 30MHz or even 300MHz for future proposed DSL systems.

According to the present invention, notches can be put into the RF spectrum to prevent DSL transmission on bands in which radio transmitters are known or discovered to be operating. Also, if there is a known interferer in the vicinity then the attempted use of the relevant frequencies for incoming traffic can be prevented, by transmitting this information to neighbouring remote nodes to update their 'picture' of the local RF 'signature' for that particular region. It would be possible to train an initial MLP to operate a DLM system with some default initial values, in order to speed the convergence to a locally trained MLP at each node if the Radio Frequency ingress and egress conditions could be considered prior to the commencement of the training of each local MLP.

This RF augmentation information could contain the following data:
- local radio & TV broadcast transmitters and estimations of reception powers at the remote node location.
- geographical remote node location with regards to typical RF interference experienced at that point.
- local sources of repetitive RF interference obtained from the RF section of the MLPs from neighbouring remote nodes.
- local radio amateur frequencies obtained via post-code information in relation to the remote node location. This may be relevant both to avoid interference on the DSL caused by the local radio amateurs, but also to avoid causing interference to the relatively weak signals which the local radio amateur users are trying to detect

This technique may be applied to exchange-based digital subscriber loop (DSL) systems in order to augment the prevailing dynamic line management (DLM) system with local RF interference knowledge. However, in the preferred embodiment it is implemented in each local remote node of a Fibre to the Distribution Point system allowing each remote node to respond to its own RF environment, and reducing the signalling overhead. This can be implemented in a module of the DLM system. This provides additional information with regards to the DLM decision making i.e. it provides information on how the profiles can be best adapted for the prevailing RF environment. For example a specific "notch" can be applied in the DSL RF spectrum if a local radio amateur is transmitting at that frequency (ingress control) or put a notch in the spectrum if a local radio amateur is attempting to listen at that frequency (egress control). In addition it should be possible for the RF module to be able to consider the RF situation at neighbouring remote nodes and use this information to augment its local knowledge of the RF environment.

Embodiments of the invention will now be discussed, by way of example, with reference to the drawings, in which:
Figure 1 depicts a conventional digital subscriber loop system
Figure 2 depicts a fibre-to-the-data-point system
Figure 3 shows the functional elements that co-operate in the module to implement the invention.
Figure 4 shows how a module to perform these functions could be integrated into a dynamic line management system implemented in a node of a FttDP system.

It should be understood that these Figures illustrate the functional elements of the system, which may in practice be embodied in one or more electronic components or in software.

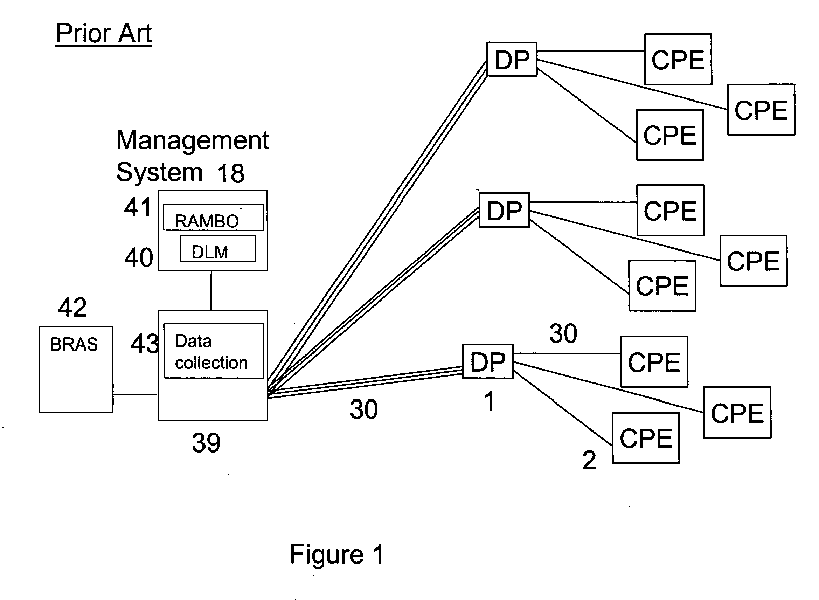

As shown in Figure 1, in conventional Digital Subscriber Loop (DSL) services, provided from the exchange 39 (or cabinet), each customer premises 2 has a dedicated physical connection 30 to the DSL access multiplexer 31 in the exchange. The connections from the exchange 39 to several different customer premises 2 may pass through a single distribution point 1, but each connection is a complete end-to-end connection.

A management system 18 can be provided to optimise the service for each customer by maximising the data rate over the physical layer 30 (subject to a predetermined maximum) whilst maintaining the stability of the line. This is achieved for each line using a Dynamic Line Management (DLM) system 40 coupled to a Rate Adaptive Management Box (RAMBo) 41 which automatically selects the optimum rate profile for each line. The chosen profile rate (upstream and downstream) supported by the line is also applied to the BRAS (Broadband Remote Access Server) 42 serving the user connection. 32 so that the services provided over the DSL line 30 match the physical capabilities of the line. The BRAS is not located at the exchange but is located deeper in the network. It can handle many thousands of lines and would provide the broadband services for many exchanges).

The physical layer connectivity is provided by a Digital subscriber line access multiplexer (DSLAM) capped at a predetermined rate limit, e.g. 5Mbit/s, and the BRAS provides the services to the DSLAM so that the services are capped to the same rate limit so that there is rate matching between the physical line and the services that are applied over that line

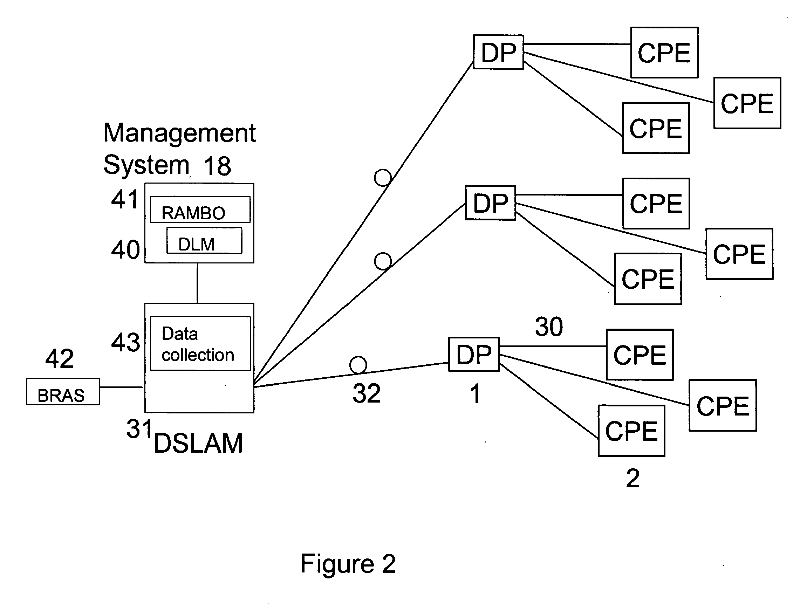

Figure 2 depicts a fibre-to-the-distribution-point (FttDP) system - sometimes referred to as "fibre to the cabinet" (FTTC). In such systems the connections 32 between the Digital subscriber line access multiplexer (DSLAM) 31 in the exchange and the individual distribution points 1 are provided by optical fibre, each carrying the traffic for all the final drop connections 30 served by that distribution point. This allows the distribution point to serve a large number of customer premises. Instead of a single DSLAM 31 providing the line statistics for thousands of lines at one convenient location, there could be a large number of remote nodes 1 (located at the distribution points), each provisioning between 8 and 24 lines.

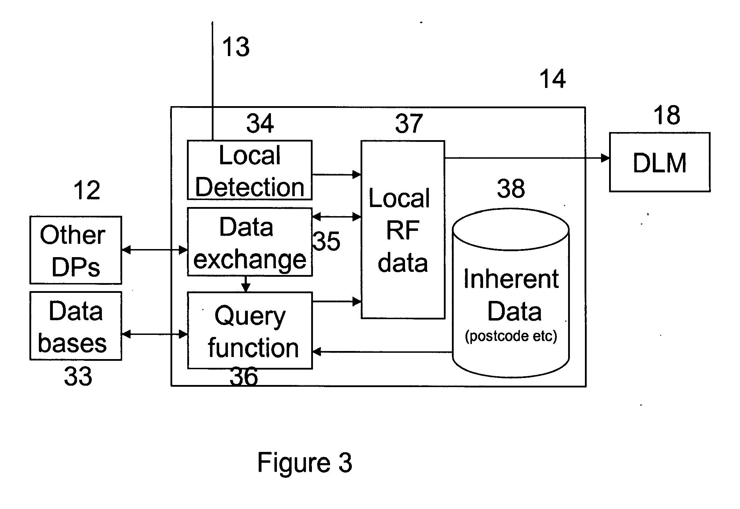

Figure 3 depicts a RF interference compensating module 14 which is in communication with a dynamic line management system 18, and also is capable of exchanging data with similar modules 12 associated with the dynamic line management systems of other points in the network. It also has means 13 for monitoring the local RF environment. The module 14 includes a store 38 of data relevant to its location, such as its geographical co-ordinates, postal code, or the like. This data may be entered manually or derived from a global positioning sensor or the like.

The module 14 also includes a query function 36 which interrogates a central database to identify known sources of RF signals in the area identified by the data in the store 38 - for example details of local radio amateur frequencies obtained via post-code information, and details of local radio & TV broadcast transmitters and estimations of reception powers. This is supplemented by data discovered by the modules own detection system 34 and exchange with data from neighbouring nodes 12.

The collected data is collated and stored in a memory, to identify the local RF environment. This information is used to control the RF frequencies used by the dynamic line management system 18. The data can be updated periodically as local conditions can change.

The data exchange function 35 also retrieves data from the memory 37 for transmission to the neighbouring nodes 12.

As shown in Figure 1, in conventional Digital Subscriber Loop (DSL) services, provided from the exchange 39 (or cabinet), each customer premises 2 has a dedicated physical connection 30 to the DSL access multiplexer 31 in the exchange. The connections from the exchange 39 to several different customer premises 2 may pass through a single distribution point 1, but each connection is a complete end-to-end connection.

A management system 18 can be provided to optimise the service for each customer by maximising the data rate over the physical layer 30 (subject to a predetermined maximum) whilst maintaining the stability of the line. This is achieved for each line using a Dynamic Line Management (DLM) system 40 coupled to a Rate Adaptive Management Box (RAMBo) 41 which automatically selects the optimum rate profile for each line. The chosen profile rate (upstream and downstream) supported by the line is also applied to the BRAS (Broadband Remote Access Server) 42 at the exchange end of the connection 32 so that the services provided over the DSL line 30 match the physical capabilities of the line.

Figure 2 illustrates a fibre-to-the-distribution-point (FttDP) system (sometimes referred to as "fibre to the cabinet" (FTTC). In such systems the connections 32 between the Digital subscriber line access multiplexer (DSLAM) 31 in the exchange and the individual distribution points 1 are provided by optical fibre, each carrying the traffic for all the final drop connections 30 served by that distribution point. This allows the distribution point to serve a large number of customer premises.
Because of the transition between optical fibre and electrical "copper" connections at the distribution points, the , they have more capabilities than a typical copper-to-copper distribution point. Essentially the modem normally located in the DSLAM at the exchange is instead located in a mini-DSLAM at the DP. Therefore as well have having some active electronics at the DP, some intelligence can be added to make this mini-DSLAM autonomous with regards to setting its own maximum stable DSL rate. This allows the line characteristics to be measured at the distribution points.

The DSL modem located at the distribution point has the ability to draw statistics both from itself and the equivalent modem on the other end of the local loop located at the customer premises (i.e. it gathers both upstream and downstream line performance statistics) - therefore the data to perform dynamic line management (DLM) is available at the local node and it should be most efficient if this data can be processed locally at the distribution points, and any subsequent change of DLM profile implemented locally. This approach also allows macro decisions on DLM profile choice to be made by gathering data from neighbouring nodes. All of this would be possible with a central data collection system, but this would add to the operations, administration, and maintenance overhead that the network has to carry and requires a data warehouse and large central processing capabilities.

Each distribution point has to transmit the periodically-gathered statistics back to a remote data collector associated with the central management function 18.

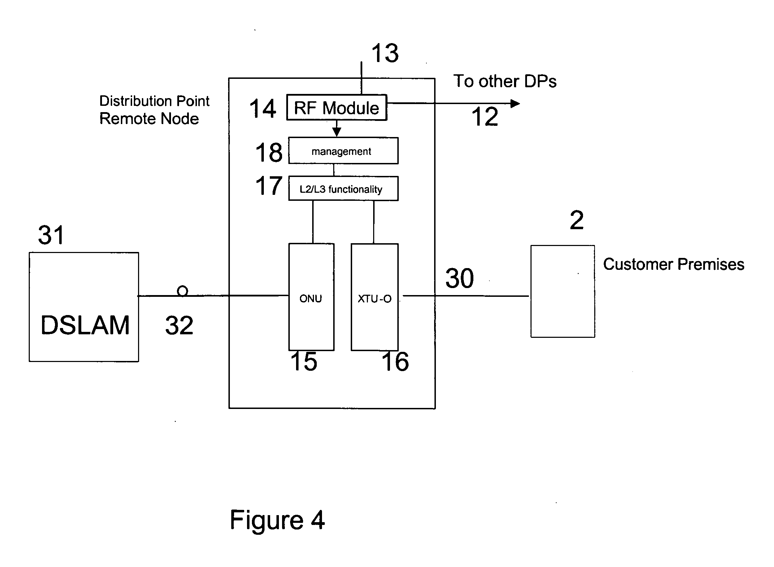

Figure 4 depicts a node 1 (distribution point) having a wired connection 30 to customer premises equipment 2 and an optical connection 32 to a Digital subscriber line access multiplexer (DSLAM) 31. Each wired customer connection is connected to an xDSL Transmission Unit (Optical) (XTU-O) 16, and the optical connection 32 is connected through an optical network unit (ONU) 15. These are interlinked by a interface unit 17 for handling functionality at levels 2 and 3 of the standard OSI seven-level model, under the control of a dynamic line management system 18. This function includes the multiplexing/demultiplexing of the various customer lines over the optical connection 32.

Having a local Dynamic line management system 18 in each node reduces the requirement for processing power, memory storage requirements, and communications back to a central DLM controller.

It should be understood that the implementation depicted in Figure 4 is an example. The functional elements are shown as co-located for convenience, but some functions may in practice be performed centrally by the DSLAM or in some distributed system. In particular, it should be noted that in a system such as that shown in Figure 1, where there is little or no computational capability in the distribution points 1, the invention would be implemented in the exchange 39, with possible local inputs from the customer premises terminals.

The dynamic line management system may be operated under the control of a multi-layer perceptron (neural net) as described in the applicant's co-pending application entitled *Management of Telecommunications Connections,* having applicant's reference B31780 and filed on the same date as the present application.

## Claims

1. A dynamic line management system for a digital subscriber loop telecommunications network for carrying data between a remote access server and a plurality of individual network terminations over connections which use electrical connections for at least part of their length, comprising a data collection system for identifying radio frequencies used by wireless transmitters in the vicinity of each electrical connection, and a transmission management system for managing the spectrum of transmission frequencies carried over the respective digital subscriber loops to prevent transmission in frequency ranges in which nearby radio transmitters are operating.

2. A system according to claim 1, comprising one or more receivers for detecting wireless transmissions in the vicinity of the network terminations.

3. A system according to claim 1 or 2 comprising a data collection system for identifying and storing data relating to radio frequencies used by transmitters in the vicinity of the network terminations.

4. A system according to claim 1, claim 2 or claim 3, comprising a spectrum controller responsive to the output of the dynamic line management system to place a notch at a specified frequency in the RF spectrum of transmissions to be made over an individual digital subscriber loop, in response to the identification of a radio transmitter or receiver operational at that frequency in the vicinity of the digital subscriber loop.

5. A system according to any preceding claim, forming part of an exchange-based dynamic line management system

6. A system according to claim 1, claim 2, claim 3 or claim 4, forming part of a dynamic line management system implemented in a local remote node of a network, allowing the node to respond to its own RF environment.

7. A system according to claim 6, wherein the data collection system comprises data collection apparatus at each of two or more network terminations, for collection of data relating to the RF environment at the respective terminations, and wherein each such termination also comprises a data exchange system to allow data collected locally to each network termination to be exchanged between the network terminations.

8. A method of controlling a digital subscriber loop telecommunications network for carrying data between a remote access server and a plurality of individual network terminations over connections which use electrical connections for at least part of their length, comprising the steps of identifying radio frequencies used by wireless transmitters in the vicinity of each electrical connection, and controlling transmission frequencies carried over the respective digital subscriber loops to prevent transmission on frequencies in which nearby radio transmitters are operating.

9. A method according to claim 8, wherein the identification of radio frequencies is performed by the detection of wireless transmissions in the vicinity of the network terminations.

10. A method according to claim 8 or claim 9 comprising the step of searching data bases for data relating to radio frequencies used by transmitters in the vicinity of the network terminations.

11. A method according to claim 8, claim 9 or claim 10 wherein, in response to the identification of a radio transmitter or receiver operational at a particular RF frequency in the vicinity of a digital subscriber loop, a notch is placed at that frequency in the transmissions to be made over the respective digital subscriber loop.

12. A method according to claim 8, claim 9, claim 10 or claim 11, wherein the process is performed in an exchange-based dynamic line management system

13. A method according to claim 8, claim 9, claim 10 or claim 11, wherein the process is implemented in a dynamic line management system implemented in one or more local remote nodes of a network, allowing each node to respond to its own RF environment.

14. A method according to claim 13, wherein data relating to the RF environment is collected at each of two or more network terminations, and such data is exchanged between the network terminations.
